# EUROPÄISCHE PATENTSCHRIFT

(11) **EP 1 652 131 B1**
(45) Veröffentlichungstag und Bekanntmachung des Hinweises auf die Patenterteilung: **22.09.2010**
(21) Anmeldenummer: 04741175.6
(22) Anmeldetag: 20.07.2004
(51) Int. Cl.: G06K 19/07, G06K 9/00, G06C 9/00

(54) **VERFAHREN ZUR AUSGABE EINES TRAGBAREN DATENTRÄGERS**
METHOD FOR THE ISSUING OF A PORTABLE DATA SUPPORT
PROCEDE D'EMISSION D'UN SUPPORT DE DONNEES PORTABLE.

(30) Priorität: 24.07.2003 DE 10333812
(43) Veröffentlichungstag der Anmeldung: 03.05.2006
(73) Patentinhaber: Giesecke & Devrient GmbH, 81677 München (DE)
(72) Erfinder: MEISTER, Gisela, 81737 München (DE); MARTIN, Nigol, 80339 München (DE)
(74) Vertreter: Vierheilig, Achim
(86) Internationale Anmeldenummer: PCT/EP2004/008108
(87) Internationale Veröffentlichungsnummer: WO 2005/010810

(56) Entgegenhaltungen:
- EP-A- 1 074 949
- WO-A-01/31577
- US-A1- 2002 145 507
- US-A1- 2002 163 421
- US-B1- 6 325 285

## Beschreibung

Die Erfindung betrifft ein Verfahren zur Ausgabe eines tragbaren Datenträgers an einen Benutzer.

Tragbare Datenträger werden insbesondere in Form von Chipkarten vielfältig eingesetzt. Je nach vorgesehenem Einsatzzweck können sehr hohe Sicherheitsstandards erreicht werden, so dass Manipulationsversuche kaum Erfolgschancen haben. Dennoch ist bei einem Verlust oder Diebstahl einer Chipkarte Vorsicht angeraten, insbesondere wenn nicht definitiv ausgeschlossen werden kann, dass ein Dritter Kenntnis von persönlichen Geheimdaten haben könnte, die für die Benutzung der Chipkarte benötigt werden. Besonders kritisch ist in diesen Zusammenhang die Ausgabe der Chipkarte an den Benutzer, da diese in der Regel nicht durch eine persönliche Aushändigung, sondern auf dem Versandweg erfolgt. Es sind deshalb Vorkehrungen zu treffen, dass die Chipkarte nur vom berechtigten Benutzer in Betrieb genommen werden kann. Hierzu ist es bereits bekannt, eine für die Inbetriebnahme der Chipkarte benötigte persönliche Geheimzahl zeitversetzt mit separater Post an den Benutzer zu senden. Bereits durch die getrennte Zustellung kann das Missbrauchsrisiko erheblich reduziert werden, da ein Unberechtigter nicht nur eine, sondern zwei Sendungen abfangen müsste. Hinzu kommt noch, dass der berechtigte Benutzer in der Regel über die bevorstehende Zusendung der Chipkarte und der Geheimzahl informiert ist. Ein Ausbleiben des Eingangs der je nach gewählter Vorgehensweise zuerst gesandten Chipkarte oder Geheimzahl könnte somit vom Benutzer gemeldet werden und daraufhin die Nachsendung der Geheimzahl bzw. der Chipkarte gestoppt werden. Dadurch könnte verhindert werden, dass ein Unberechtigter in den gemeinsamen Besitz von Chipkarte und Geheimzahl käme.

Trotz dieser vielfach praktizierten und bewährten Vorgehensweise besteht vor allem bei Anwendungen mit sehr hohen Sicherheitsanforderungen, wie beispielsweise Signaturanwendungen, der Bedarf, möglichst jedes potentielle Risiko auszuschalten. Insbesondere soll möglichst auch das Restrisiko eliminiert werden, dass ein Unberechtigter sowohl die Sendung mit der Chipkarte als auch die Sendung mit der persönlichen Geheimzahl unbemerkt abfängt und dadurch die Chipkarte unberechtigterweise benutzen kann. Außerdem besteht häufig die Forderung, dass die Inbetriebnahme der Chipkarte durch den Benutzer persönlich zu erfolgen hat. Selbst bei einer ordnungsgemäßen Übermittlung der Chipkarte und der Geheimzahl an den Benutzer ist aber nicht gewährleistet, dass die Inbetriebnahme der Chipkarte tatsächlich vom Benutzer vorgenommen wird, da der Benutzer die Geheimzahl an einen Dritten weitergeben kann, der dann die Inbetriebnahme der Chipkarte vornehmen könnte. Im Nachhinein lässt sich nicht feststellen, wer die Chipkarte tatsächlich in Betrieb genommen hat.

Aus der US 2002/163421 A1 bzw. der EP 1074 949 A1 sind Verfahren zur Ausgabe von tragbaren Datenträgern bekannt, die Referenzdaten enthalten, die zur Prüfung von eingegebenen Verifikationsdaten verwendet werden. Vor der Übergabe des tragbaren Datenträgers an den Benutzer werden biometrische Daten des Benutzers unter Aufsicht einer Registrierungsstelle erfasst und nach Übergabe des tragbaren Datenträgers an den Benutzer werden zur Aktivierung des tragbaren Datenträgers die unter Aufsicht der Registrierungsstelle erfassten biometrischen Daten als Verifikationsdaten mit aktuell erfassten biometrischen Daten oder daraus abgeleiteten Daten verglichen.

Der Erfindung liegt die Aufgabe zugrunde, die Ausgabe eines tragbaren Datenträgers an einen Benutzer möglichst sicher zu gestalten.

Diese Aufgabe wird durch ein Verfahren mit der Merkmalskombination des Anspruchs 1 gelöst.

Beim erfindungsgemäßen Verfahren zur Ausgabe eines tragbaren Datenträgers an einen Benutzer werden im tragbaren Datenträger Referenzdaten abgelegt, die vom tragbaren Datenträger für eine Prüfung von eingegebenen Verifikationsdaten herangezogen werden. Eine Aktivierung des tragbaren Datenträgers für die Benutzung erfolgt nur dann, wenn die Prüfung der eingegebenen Verifikationsdaten ein positives Ergebnis liefert. Die Besonderheit des erfindungsgemäßen Verfahrens besteht dabei darin, dass für die Erzeugung der Referenzdaten vor Übermittlung des tragbaren Datenträgers an den Benutzer biometrische Daten des Benutzers unter Aufsicht einer Registrierungsstelle erfasst werden und nach Übermittlung des tragbaren Datenträgers an den Benutzer für die zur Aktivierung des tragbaren Datenträgers erforderliche Prüfung als Verifikationsdaten vom Benutzer aktuell erfasste biometrische Daten oder daraus abgeleitete Daten verwendet werden.

Erfindungsgemäß erfolgt eine Aktivierung des tragbaren Datenträgers für die Benutzung nur dann, wenn ein vorgegebener Grad an Übereinstimmung zwischen den eingegebenen Verifikationsdaten und den gespeicherten Referenzdaten erreicht wird. Durch geeignete Vorgabe des geforderten Grads an Übereinstimmung kann im Hinblick auf die jeweilige Anwendung, für die der tragbare Datenträger vorgesehen ist, zum einen ein zuverlässigen Schutz vor einer Aktivierung durch einen Unberechtigten gewährleistet werden und zum anderen eine Verweigerung der Aktivierung gegenüber dem rechtmäßigen Benutzer weitgehend vermieden werden. Zu einer erhöhten Sicherheit trägt es auch bei, wenn eine Aktivierung des tragbaren Datenträgers für die Benutzung nur dann erfolgt, wenn die eingegebenen Verifikationsdaten nicht identisch mit den gespeicherten Referenzdaten übereinstimmen, da bei einer identischen Übereinstimmung die Gefahr besteht, dass als Verifikationsdaten eine Kopie der Referenzdaten verwendet wird.

Das erfindungsgemäße Verfahren hat den Vorteil, dass ein sehr hoher Sicherheitsstandard bei der Ausgabe eines tragbaren Datenträgers an einen Benutzer gewährleistet ist. Dabei ist es insbesondere von Vorteil, dass der tragbare Datenträger ausschließlich vom Benutzer persönlich aktiviert werden kann und sich dies auch nachträglich belegen lässt. Schließlich ist es noch von Vorteil, dass die biometrischen Daten in der Registrierungsstelle unter Aufsicht von fachkundigem Personal erfasst werden, so dass bei der Erfassung Fehler weitgehend vermieden werden können und somit eine hohe Betriebssicherheit bei der Aktivierung des tragbaren Datenträgers erreichbar ist.

Im Zusammenhang mit der Erfassung der biometrischen Daten bei der Registrierungsstelle wird in der Regel eine Identitätsprüfung des Benutzers durchgeführt. Dadurch ist gewährleistet, dass die aus den erfassten biometrischen Daten erzeugten Referenzdaten mit hoher Zuverlässigkeit der Person des Benutzers zugeordnet werden können.

Weiterhin kann es im Rahmen des erfindungsgemäßen Verfahrens vorgesehen sein, dass vom Benutzer über eine Datenverbindung ein für den tragbaren Datenträger erzeugtes Zertifikat bei einer Registrierungsbehörde freigeschaltet wird. Damit kann der Benutzer dafür Sorge tragen, dass das Zertifikat, dass bei der Benutzung des tragbaren Datenträgers von Bedeutung ist, erst dann allgemein verfügbar ist, nachdem er den tragbaren Datenträger aktiviert hat.

Die gespeicherten Referenzdaten können zusätzlich bei einer Anwendung, für die der tragbare Datenträger vorgesehen ist, verwendet werden. Durch diese Doppelfunktion kann beim tragbaren Datenträger Speicherplatz eingespart werden. Zudem kann das hohe Sicherheitsniveau der Referenzdaten über die Aktivierung des tragbaren Datenträgers hinaus genutzt werden.

Das erfindungsgemäße Verfahren kann insbesondere zur Ausgabe eines tragbaren Datenträgers angewendet werden, der für die Erzeugung einer Signatur eingesetzt wird. Bei einer derartigen Anwendung ist eine zweifelsfreie Feststellung der Urheberschaft der Signatur und somit des Benutzers des tragbaren Datenträgers sehr wichtig. Der tragbare Datenträger kann insbesondere als eine Chipkarte ausgebildet sein, die bei sehr handlichen Abmessungen einen sehr hohen Sicherheitsstandard bietet.

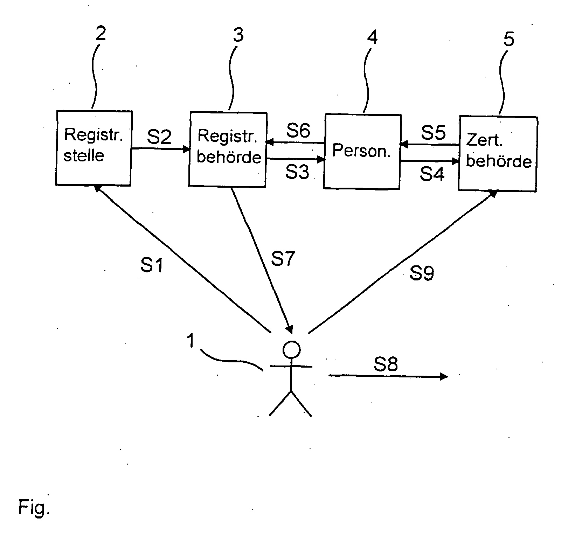

Die Erfindung wird im folgenden anhand des in der Zeichnung dargestellten Ausführungsbeispiels näher erläutert, bei dem der tragbare Datenträger als Chipkarte ausgebildet ist.

Die einzige Fig. zeigt eine schematische Darstellung der erfindungsgemäßen Vorgehensweise bei der Ausgabe einer Chipkarte an einen Benutzer. Die Darstellung bezieht sich insbesondere auf die Ausgabe einer Chipkarte für eine Signaturanwendung an einen Benutzer. Eine derartige Chipkarte dient dazu, ein in digitaler Form vorliegendes Dokument mit einer Signatur zu versehen die zum einen fälschungssicher ist und zum anderen von jedem Dritten auf ihre Echtheit hin überprüfbar ist. Hierzu ist in der Chipkarte ein geheimer Schlüssel zugriffsgeschützt abgelegt, mit dessen Hilfe ein aus dem Dokument gebildeter Hash-Wert zur Erzeugung einer Signatur einer kryptographischen Operation unterzogen wird. Bei der kryptographischen Operation handelt es sich in der Regel um eine Entschlüsselung mit einem geheimen Schlüssel. Die so erzeugte Signatur kann beispielsweise an das Dokument angehängt werden. Zur Prüfung der Echtheit der Signatur und gleichzeitig auch der Authentizität des damit signierten Dokuments kann jeder Dritte von einer Zertifizierungsbehörde ein dem Unterzeichner des Dokuments zugeordnetes Zertifikat anfordern. Mit Hilfe des Zertifikats wird die Signatur einer kryptographischen Operation unterzogen. Dabei handelt es sich in der Regel um eine Verschlüsselung mit einem öffentlichen Schlüssel. Das Ergebnis wird mit einem Hash-Wert verglichen, der auf Basis des signierten Dokuments gebildet wird. Eine Übereinstimmung bedeutet zum einen, dass der geheime und der öffentliche Schlüssel korrespondieren und die Signatur somit echt ist. Zum anderen folgt aus einer Übereinstimmung, dass die kryptographischen Operationen auf Basis des gleichen Dokuments durchgeführt wurden und somit das dem Dritten vorliegende Dokument authentisch ist.

Angesichts der weitreichenden Konsequenzen, die das Signieren eines Dokuments auslösen kann, ist das erfindungsgemäße Verfahren so aufgebaut, dass die an den Benutzer ausgegebene Chipkarte nur von diesem persönlich aktiviert werden kann. Eine Aktivierung durch einen Dritten auch mit Einverständnis des Benutzers ist ausgeschlossen. Dies gelingt zum einen dadurch, dass die Aktivierung an biometrische Daten des Benutzers geknüpft wird und zum anderen durch eine von Anfang an sichere Zuordnung der dafür benötigten biometrischen Referenzdaten zur Person des Benutzers. Im einzelnen wird folgendermaßen vorgegangen:

Der Benutzer, der in der Fig. mit dem Bezugszeichen 1 bezeichnet wird, wendet sich in einem Schritt S1 persönlich an eine öffentliche Registrierungsstelle 2. Dort wird die Identität des Benutzers 1 beispielsweise anhand eines vom Benutzer 1 vorgelegten Ausweisdokuments überprüft. Wenn die Identität des Benutzers 1 festgestellt ist werden persönliche Daten und biometrische Referenzdaten des Benutzers 1 erfasst. Dabei ist es insbesondere wichtig, dass die biometrischen Referenzdaten unter Aufsicht der Registrierungsstelle 2 erfasst werden, um eine definitive Zuordnung der biometrischen Referenzdaten zur Person des Benutzers 1 sicherzustellen und eine unsachgemäße Erfassung der biometrischen Referenzdaten zu vermeiden, die bei der späteren Aktivierung der Chipkarte Probleme verursachen könnte. Von der Sorgfalt, die von der Registrierungsstelle 2 angewendet wird, hängen somit die Sicherheit und die Funktionsfähigkeit der Anwendungen, für die die Chipkarte vorgesehen ist, wesentlich ab. Um die Sicherheit und Funktionsfähigkeit weiter zu verbessern werden als biometrische Referenzdaten in der Regel nicht die erfassten biometrischen Rohdaten verwendet, sondern es findet eine Aufbereitung dieser Rohdaten statt.

In einem auf Schritt S1 folgenden Schritt S2 versendet die Registrierungsstelle 2 die erfassten persönlichen Daten und biometrischen Referenzdaten des Benutzers 1 auf einem gesicherten Weg an eine Registrierungsbehörde 3. Die Registrierungsbehörde 3 versendet die Daten in einem Schritt S3 auf einem gesicherten Weg an einen Personalisierer 4. Bei dem Personalisierer 4 kann es sich beispielsweise um einen Hersteller von Chipkarten handeln. Der Personalisierer 4 veranlasst die Generierung eines Schlüsselpaars bestehend aus einem geheimen und einem zugehörigen öffentlichen Schlüssel. Der geheime Schlüssel wird zugriffsgeschützt in der Chipkarte abgelegt. Für den öffentlichen Schlüssel fordert der Personalisierer 4 in einem Schritt S4 ein Zertifikat von einer Zertifizierungsbehörde 5 an. Die Zertifizierungsbehörde 5 erzeugt das Zertifikat und sendet es in einem Schritt S5 an den Personalisierer 4. Weiterhin speichert die Zertifizierungsbehörde 5 das Zertifikat ab und stellt es auf Wunsch jedermann zur Verfügung. Der Personalisierer 4 führt eine Personalisierung der Chipkarte durch, in deren Rahmen die für die Verwendung der Chipkarte durch den Benutzer 1 benötigten Daten in die Chipkarte eingeschrieben werden. Diese Daten umfassen insbesondere auch die biometrischen Referenzdaten des Benutzers 1. Nach der Personalisierung sendet der Personalisierer 4 die personalisierte Chipkarte in einem Schritt S6 an die Registrierungsbehörde 3. Die Chipkarte befindet sich dabei in einem deaktivierten Zustand, d. h. eine Verwendung der Chipkarte ist erst nach vorheriger Aktivierung durch den Benutzer 1 möglich. Dadurch soll eine missbräuchliche Verwendung der Chipkarte vor der Übergabe an den Benutzer 1 verhindert werden. Die Registrierungsbehörde 3 leitet die Chipkarte in einem Schritt S 7 an den Benutzer 1 weiter. Während dieser Weiterleitung an den Benutzer 1 ist die Chipkarte weiterhin deaktiviert.

Der Benutzer 1 führt in einem Schritt S8 eine Aktivierung der Chipkarte durch. Hierzu veranlasst der Benutzer 1 beispielsweise unter Zuhilfenahme eines geeigneten Endgeräts die Eingabe seiner biometrischen Daten in die Chipkarte. Angesichts der Komplexität der biometrischen Daten, die sich beispielsweise auf einen Fingerabdruck, der Struktur des Augenhindergrunds usw. beziehen können, wir dabei je nach Leistungsfähigkeit der Chipkarte und der vorgesehenen Anwendung beispielsweise so vorgegangen, dass vom Endgerät bereits eine Vorauswertung der biometrischen Daten durchgeführt wird und die so ermittelten Daten anstelle der Rohdaten als biometrische Verifikationsdaten an die Chipkarte weitergeleitet werden. In der Chipkarte werden die eingegebenen biometrischen Verifikationsdaten mit den gespeicherten biometrischen Referenzdaten verglichen. Bei einem ausreichenden Grad an Übereinstimmung wird davon ausgegangen, dass die biometrischen Verifikationsdaten vom berechtigten Benutzer 1 stammen, von dem zuvor bei der Registrierungsstelle 2 die biometrischen Referenzdaten erfasst wurden. Folglich wird die Chipkarte für die Benutzung aktiviert. Reicht der Grad an Übereinstimmung nicht aus, so unterbleibt die Aktivierung der Chipkarte. In dem Sonderfall einer perfekten Übereinstimmung unterbleibt die Aktivierung ebenfalls, da angesichts der mit einer gewissen Messungenauigkeit behafteten Erfassung sowohl der Referenzdaten als auch der Verifikationsdaten nicht mit einer perfekten Übereinstimmung zu rechnen ist. Tritt dennoch eine perfekte Übereinstimmung auf, so deutet das darauf hin, dass für die Verifikationsdaten eine Kopie der Referenzdaten verwendet wird und somit ein Manipulationsversuch vorliegt.

Die Aktivierung der Chipkarte gemäß der Erfindung wird insbesondere zur Absicherung des Transports der Chipkarte eingesetzt, so dass die Chipkarte durch eine erfolgreiche Aktivierung für die weitere Benutzung freigeschaltet wird und damit überhaupt erst einsetzbar wird. Im Rahmen dieser Benutzung, d. h. beim vorliegenden Ausführungsbeispiel beim Signieren eines Dokuments, ist zusätzlich jedes Mal ein Berechtigungsnachweis seitens des Benutzers 1 für die Durchführung der Anwendung zu erbringen. Dieser Berechtigungsnachweis kann wiederum auf der Basis von biometrischen Daten geführt werden, wobei insbesondere die gleichen Referenzdaten verwendet werden können, die bereits bei der erstmaligen Aktivierung der Chipkarte nach der Ausgabe an den Benutzer verwendet wurden.

Beim vorliegenden Ausführungsbeispiel wird vom Benutzer 1 vor der Verwendung der Chipkarte zum Signieren von Dokumenten in einem Schritt S9 das Zertifikat bei der Zertifizierungsbehörde 5 freigeschaltet. Durch die Freischaltung wird das Zertifikat für jedermann zugänglich gemacht, so dass jeder eine dem Benutzer 1 zugerechnete Signatur auf ihre Echtheit prüfen kann. Dieser Überprüfungsmöglichkeit kommt eine wichtige Bedeutung im Hinblick auf die Akzeptanz der Signatur des Benutzers 1 durch Dritte zu, da diese nur dann eine Signatur akzeptieren werden, wenn sie die Möglichkeit haben, deren Echtheit auf einfache Weise zuverlässig überprüfen zu können. Die Freischaltung des Zertifikats durch den Benutzer 1 kann beispielsweise über das Internet erfolgen.

## Patentansprüche

1. Verfahren zur Ausgabe eines tragbaren Datenträgers an einen Benutzer (1), wobei im tragbaren Datenträger Referenzdaten abgelegt werden, die vom tragbaren Datenträger für eine Prüfung von eingegebenen Verifikationsdaten herangezogen werden und wobei eine Aktivierung des tragbaren Datenträgers für die Benutzung nur dann erfolgt, wenn die Prüfung der eingegebenen Verifikationsdaten ein positives Ergebnis liefert, wobei für die Erzeugung der Referenzdaten vor Übermittlung des tragbaren Datenträgers an den Benutzer (1) biometrische Daten des Benutzers (1) unter Aufsicht einer Registrierungsstelle (2) erfasst werden und nach Übermittlung des tragbaren Datenträgers an den Benutzer (1) für die zur Aktivierung des tragbaren Datenträgers erforderliche Prüfung als Verifikationsdaten vom Benutzer (1) aktuell erfasste biometrische Daten oder daraus abgeleitete Daten verwendet werden, **dadurch gekennzeichnet, dass** die Aktivierung des tragbaren Datenträgers für die Benutzung nur dann erfolgt, wenn ein vorgegebener Grad an Übereinstimmung zwischen den eingegebenen Verifikationsdaten und den gespeicherten Referenzdaten erreicht wird, wobei die Aktivierung des tragbaren Datenträgers für die Benutzung nur dann erfolgt, wenn die eingegebenen Verifikationsdaten nicht identisch mit den gespeicherten Referenzdaten übereinstimmen.

2. Verfahren nach Anspruch 1, **dadurch gekennzeichnet, dass** im Zusammenhang mit der Erfassung der biometrischen Daten bei der Registrierungsstelle (2) eine Identitätsprüfung des Benutzers (1) durchgeführt wird.

3. Verfahren nach einem der vorhergehenden Ansprüche, **dadurch gekennzeichnet, dass** vom Benutzer (1) über eine Datenverbindung ein für den tragbaren Datenträger erzeugtes Zertifikat bei einer Zertifizierungsbehörde (5) freigeschaltet wird.

4. Verfahren nach einem der vorhergehenden Ansprüche, **dadurch gekennzeichnet, dass** die gespeicherten Referenzdaten zusätzlich bei einer Anwendung, für die der tragbaren Datenträger vorgesehen ist, verwendet werden.

5. Verfahren nach einem der vorhergehenden Ansprüche, **dadurch gekennzeichnet, dass** der tragbare Datenträger für die Erzeugung einer Signatur eingesetzt wird.

6. Verfahren nach einem der vorhergehenden Ansprüche, **dadurch gekennzeichnet, dass** der tragbare Datenträger als eine Chipkarte ausgebildet ist.

## Claims

1. A method for issuing a portable data carrier to a user (1), wherein in the portable data carrier there are stored reference data which are drawn on by the portable data carrier for a check of entered verification data, and wherein an activation of the portable data carrier for use is effected only when the check of the entered verification data delivers a positive result, wherein for generating the reference data, biometric data of the user (1) are captured under the supervision of a registration office (2) before the portable data carrier is transferred to the user (1), and after the portable data carrier is transferred to the user (1) biometric data currently captured from the user (1) or data derived therefrom are employed as verification data for the check necessary for activating the portable data carrier, **characterized in that** the activation of the portable data carrier for use is effected only when a predetermined degree of match is reached between the entered verification data and the stored reference data, wherein the activation of the portable data carrier for use is effected only when the entered verification data do not identically match the stored reference data.

2. The method according to claim 1, **characterized in that** in connection with the capture of the biometric data at the registration office (2) an identity check of the user (1) is carried out.

3. The method according to either of the preceding claims, **characterized in that** a certificate generated for the portable data carrier is enabled at a certification authority (5) via a data connection by the user (1).

4. The method according to any of the preceding claims, **characterized in that** the stored reference data are employed additionally upon an application for which the portable data carrier is intended.

5. The method according to any of the preceding claims, **characterized in that** the portable data carrier is used for generating a signature.

6. The method according to any of the preceding claims, **characterized in that** the portable data carrier is configured as a chip card.

## Revendications

1. Procédé de délivrance d'un support de données portable à un utilisateur (1), des données de référence étant enregistrées dans le support de données portable, lesdites données étant utilisées par le support de données portable pour un examen de données de vérification entrées, et une activation du support de données portable pour l'utilisation n'ayant lieu que quand l'examen des données de vérification entrées fournit un résultat positif, des données biométriques de l'utilisateur (1) étant saisies sous la surveillance d'un office d'enregistrement (2) pour la génération des données de référence avant la remise du support de données portable à l'utilisateur (1) et des données biométriques actuellement saisies par l'utilisateur (1) ou des données dérivées de ces dernières étant utilisées après la remise du support de données portable à l'utilisateur (1) en tant que données de vérification pour l'examen nécessaire à l'activation du support de données portable, **caractérisé en ce que** l'activation du support de données portable pour l'utilisation n'a lieu que quand un degré de concordance prédéterminé entre les données de vérification entrées et les données de référence enregistrées est atteint, l'activation du support de données portable pour l'utilisation n'ayant lieu que quand les données de vérification entrées ne concordent pas de façon identique avec les données de référence enregistrées.

2. Procédé selon la revendication 1, **caractérisé en ce qu'**une vérification d'identité de l'utilisateur (1) est effectuée en relation avec la saisie des données biométriques auprès de l'office d'enregistrement (2).

3. Procédé selon une des revendications précédentes, **caractérisé en ce qu'**un certificat produit pour le support de données portable est débloqué par l'utilisateur (1) auprès d'une autorité de certification (5) par l'intermédiaire d'une connexion de données.

4. Procédé selon une des revendications précédentes, **caractérisé en ce que** les données de référence enregistrées sont utilisées en outre lors d'une application pour laquelle le support de données portable est prévu.

5. Procédé selon une des revendications précédentes, **caractérisé en ce que** le support de données portable est employé pour la génération d'une signature.

6. Procédé selon une des revendications précédentes, **caractérisé en ce que** le support de données portable est réalisé sous forme d'une carte à puce.
